# EUROPEAN PATENT APPLICATION

(11) **EP 0 594 463 A1**
(43) Date of publication of application: **27.04.1994**
(21) Application number: 93308450.1
(22) Date of filing: 22.10.1993
(51) Int. Cl.: F02M 25/07, F02B 47/08, F02B 31/00, F02B 17/00

(54) **Spark ignited internal combustion engines**

(30) Priority: 23.10.1992 GB 9222353
(71) Applicant: RICARDO CONSULTING ENGINEERS LIMITED, West Sussex BN4 5FG (GB)
(72) Inventor: Stokes, John, Steyning, West Sussex BN44 3UA (GB); Lake, Timothy Hugh, Steyning, West Sussex BN44 3JN (GB)
(74) Representative: Jennings, Nigel Robin

(57) **Abstract**

A spark ignited four stroke engine employing exhaust gas recirculation and stratification of the recirculated exhaust gas has at least one cylinder (2) accommodating the piston (32) and communicating with at least one inlet port (11) cooperating with an inlet valve (3) for inducing air into the cylinder and at least one exhaust port (8) cooperating with the exhaust valve (6) for discharging exhaust gas from the cylinder. The inlet port (11) is so constructed and arranged that air flowing through it is caused to swirl in the cylinder about the cylinder axis in one direction. The port for introducing recirculated exhaust gas into the cylinder is so constructed and arranged that exhaust gas flowing through it is caused to swirl in the cylinder about the cylinder axis in the said one direction. The inlet valve (3) and the exhaust valve (6) are connected to be operated by respective variable valve timing mechanisms (34,36) which are so controlled, at low engine loads, that at the beginning of each induction stroke of the piston the exhaust valve (6) is open and the inlet valve (3) is closed wherby initially exhaust gas is induced into the cylinder whereafter the exhaust valve (6) is closed and the inlet valve (3) is opened and air is induced into the cylinder.

## Description

The present invention relates to internal combustion engines of spark ignited type and is concerned with reducing the emission by such engines of oxides of nitrogen (NOx) and hydrocarbons (HC) and reducing the fuel consumption.

A known method for reducing NOx emissions and fuel consumption of a gasoline engine is to ensure that a lean fuel/air mixture is employed. This has the effect of diluting the fuel with air and reducing the combustion temperature. Lower combustion temperatures tend to result in reduced NOx emissions. Reduced throttling losses and better combustion efficiency of the so-called lean burn engine result in low- erfuel consumption. A major disadvantage of this approach is that excess oxygen is present in the exhaust gas. It is therefore not possible to employ a reducing catalyst if further reductions in NOx emissions are required.

It is also known that a similar effect to that achieved with lean burn can be achieved by the use of exhaust gas recirculation (EGR). If, instead of diluting the combustion gases with excess air, they are diluted with recirculated exhaust gas (REG), reductions in temperature can be achieved without the use of excess oxygen. The combustion process can be substantially stoichiometric and it is possible to use a reducing catalyst in the exhaust system for the conversion of residual NOx. A further benefit of using EGR is a fuel economy improvement due to the reduced throttling losses in the intake airstream. However, the use of EGR is also associated with disadvantages if the exhaust gas is distributed throughout the combustion chamber because it adversely affects the initiation and propagation of the flame front and can result in premature termination of combustion and is thus responsible for an increase in the emission of unburnt hydrocarbons.

It is also known that the problems associated with the use of EGR can be largely overcome by configuring the engine such that a stratified charge is produced in the combustion chamber, that is to say by arranging the air and recirculated exhaust gas inlets such that the air/fuel mixture and recirculated exhaust gas occupy separate portions of the combustion chamber and remain substantially unmixed. Additionally, stratification of the exhaust gas over crevices, oil and deposits in the combustion chamber will reduce HC emissions by preventing contact of the air/fuel mixture with the oil, crevices and deposits. The known methods of achieving this involve additional inlet ports or valves which are used solely for the induction of recirculated exhaust gas or allow air and exhaust gas to mix before or whilst passing through the inlet valve. Engines of both these types are disclosed in U.S. Patent 4,193,382.

The disadvantage of such systems is that the additional opening into the combustion chamber adds cost and complexity and limits the space available for the other features of the combustion chamber such as intake and exhaust valves and the spark plug. The introduction of exhaust gas into the air stream before the inlet valve leads to substantial mixing and thus ineffective stratification and thus results in the disadvantages referred to above.

US-A-4393853 discloses a four cylinder engine in which each cylinder has a single inlet port and a single exhaust port formed in the cylinder head and a further tangentially directed exhaust outlet/EGR inlet formed in the cylinder wall and positioned to be exposed by the piston at 60° after the top dead centre position. The exhaust outlet/EGR inlets of the four cylinders are connected together in two pairs. The inlet port is of helical type whereby on the induction stroke the inlet air is introduced into the cylinder to form a body of air which swirls around the cylinder axis. At low load, when the exhaust outlet/EGR inlet is exposed by the piston recirculated exhaust gas is introduced tangentially into the cylinder from the cylinder to which it is connected so that it swirls in the same direction as the air. The exhaust gas remains substantially outside the air and the contents of the cylinder are therefore nominally radially stratified. On the exhaust stroke the exhaust gases are all expelled in the usual manner through the exhaust valve in the cylinder head except for that small proportion which is required by the associated cylinder and this is discharged through the exhaust outlet/EGR inlet opening.

Quite apart from the fact that it has been found that radial stratification is unsatisfactory due to the fact that the two rotating bodies of gas tend to become considerably mixed, it is inconvenient to have to position an opening in the cylinder wall. Thus the presence of such an opening leads to high wear of the piston rings and to distortion of the cylinderwall which results in high oil consumption. Furthermore, the piston tends to scrape lubricating oil into the opening and the exhaust gas thus contains a relatively high proportion of unburnt or partially burnt oil.

It is the object of the present invention to provide a spark ignited engine which is configured to produce a stratified charge in the or each combustion chamber and which uses exhaust gas recirculation but which does not use additional ports or valves for the induction of the exhaust gas into the cylinder whilst maintaining separation of the exhaust gas from the inlet air until the cylinder is reached and even then maintains them substantially separate, i.e. stratified.

According to the present invention a spark ignited engine employing exhaust gas recirculation and stratification of the recirculated exhaust gas and having at least one cylinder accommodating a piston and communicating with at least one inlet port cooperating with an inlet valve for inducing air into the cylinder and at least one exhaust port cooperating with an exhaust valve for discharging exhaust gas from this cylinder, the inlet port being so constructed and arranged that air flowing through it is caused to swirl in the cylinder about the cylinderaxis in one direction, the means for introducing recirculated exhaust gas into the cylinder being so constructed and arranged that exhaust gas flowing through it is caused to swirl in the cylinder about the cylinder axis in the said one direction is characterised in that the inlet valve and the exhaust valve are connected to be operated by respective variable valve timing mechanisms which are so controlled, at low engine loads, that at the beginning of each induction stroke of the piston the exhaust valve is open and the inlet valve is closed whereby initially exhaust gas is induced into the cylinder whereafter the exhaust valve is closed and the inlet valve is opened and air is induced into the cylinder.

It is of course normal and essential in conventional engines that the exhaust valve be closed and the inlet valve open during the induction stroke of the piston so as to ensure that only air or air/fuel mixture is induced into the cylinder. The engine in accordance with the present invention is radically different in that the exhaust valve is deliberately held open and the inlet valve deliberately held closed at the beginning of the induction stroke whereby initially only exhaust gas is induced into the cylinder. This is caused to swirl within the cylinder substantially about the cylinder axis in one direction due to the construction and/or orientation of the exhaust port. Thus the exhaust port may be constructed to cause swirl of the inflowing exhaust gas, that is to say it may be of known helical type, or alternatively it may be positioned to cause the inflowing exhaust gas to swirl in the cylinder, that is to say it may be of known directed type. After a period of time determined by the engine controller or management system the exhaust valve is closed and the inlet valve is opened and induction of air or air/fuel mixture proceeds in the usual manner. The induced air is also caused by the construction and/or orientation of the inlet valve to swirl in the cylinder about the cylinder axis in the same direction as the exhaust gas and this results in the exhaust gas and the air remaining substantially separate in the cylinder and thus in a sharp stratification of the inlet charge within the cylinder.

In a conventional four stroke engine the inlet valve typically opens at 10° ± 5° before top dead centre (btdc) and typically closes at 50° ±10° after bottom dead centre (abdc). The exhaust valve typically opens at 50⁰ ± 10⁰ before bottom dead centre (bbdc) and typically closes at 10° ± 5° after top dead centre (atdc). In an engine in accordance with the invention the inlet valve typically opens at anywhere between 70° atdc and the standard time and typically closes at 50° ±10° atdc whilst the exhaust valve typically opens at 50° ±10° bbdc and typically closes at 80° to 10° atdc.

It will of course be appreciated that the amount of exhaust gas which is desirably induced into the cylinder increases with decreasing load and thus the variable valve timing mechanisms are preferably controlled so that the time during the induction stroke for which the exhaust valve is held open and the inlet valve is held closed is reduced as the engine load increases.

It is of course desirable that the fuel is mixed only with the induced air and not also with the induced exhaust gas and this will happen automatically if the engine includes a conventional carburettor. However, if the engine includes a fuel injector arranged to inject fuel into the inlet port it is preferably controlled to inject fuel only after the inlet valve has opened.

The engine may include only one inlet port and one exhaust port per cylinder. However, it is preferred that the cylinder communicates with two exhaust ports cooperating with respective exhaust valves and that only one exhaust valve is connected to a variable valve timing mechanism whilst the othervalve is connected to a conventional actuating mechanism and is thus opened and closed at the conventional times. It is preferred also that the cylinder communicates with two inlet ports cooperating with respective inlet valves and that only one of the inlet valves is connected to a variable valve timing mechanism and that the other valve is opened and closed at the conventional times. It is preferred also that means are provided associated with the second inlet port which are controlled to permit no air to pass through the second inlet port at low engine loads but to permit air to pass through it at high engine loads. This results in more air being available for combustion at those times when it is needed, that is to say when more fuel is injected into the cylinder.

Whilst swirl about the cylinder axis of the inlet air is necessary at low engine loads to ensure that the desired sharp stratification of the inlet charge is produced, such swirl may not be necessary or only a reduced degree of swirl may be required at high engine loads. If, as is preferably the case, the inlet port whose valve is operated by the variable valve timing mechanism is of known directed type it is necessary that air is not admitted through the other inlet port at low engine loads since this would result in a reduction or destruction of the swirl of the inlet air or alternatively that if air is admitted through the second inlet port it is admitted in a manner which does not substantially destroy the swirl of the inlet air. If no air is admitted through the second inlet port at low engine loads the means referred to above associated with the second inlet port may comprise either a throttle valve provided in the second inlet portorthe inlet duct communicating with itwhich is controlled to be closed at low engine loads but progressively to open within increasing engine load after a predetermined mid load point has been reached. Alternatively, the second inlet valve may be provided with apparatus of known type which deactivates it and thus ensures that it remains closed at low engine loads but opens after the said mid load point has been reached. If air is to be admitted through the second inlet port at all engine loads, this can be done without destroying the necessary swirl of the inlet air in a known manner, e.g. by providing throttles in the two inlet ports which impart the necessary directionality to the air flowing through them or alternatively by providing a variable valve timing mechanism for the second inlet valve also and ensuring that, at low engine loads, the first inlet valve is fully opened whilst the second inlet valve is only partially opened.

In the engine in accordance with the invention it is intended that recirculated exhaust gas should be introduced into the cylinder only at relatively low engine loads and that it should be replaced by air at higher engine loads. However, it is also contemplated that a small amount of exhaust gas may be introduced into the cylinder at all engine loads so as to obtain the known advantages. This may be simply achieved by programming the associated electronic control system appropriately so as to ensure that the exhaust valve is retained open for a brief period at the beginning of the induction stroke of the piston.

Whilst the control of the variable valve timing mechanisms is effected principally in dependence on the sensed engine load, which is a function of the amount of fuel injected into the cylinder during each induction stroke of the piston, it is likely in practice also to be desirable to control the variable valve timing mechanisms in dependence on the engine speed though the speed dependency will be of secondary importance compared to the load dependency.

Further features and details of the invention will be apparent from the following description of one specific embodiment which is given by way of example with reference to the accompanying diagrammatic drawings, in which:-
Figure 1 is a plan view of one cylinder of a multi-cylinder, four stroke, spark ignited engine of the type having two inlet valves and two exhaust valves; and
Figure 2 is a side sectional view of the cylinder shown in Figure 1.

The drawings show a single cylinder 2 of an engine which accommodates a reciprocable piston 32 and is closed by a cylinder head 1 which includes two inlet valves 3 and 4 controlling inlet ports 11 and 12, respectively, and two exhaust valves 5 and 6 controlling exhaust ports 7 and 8, respectively. Exhaust ports 7 and 8 communicate with exhaust duct 9. Inlet ports 11 and 12 are generally parallel and communicate with generally parallel inlet ducts 13 and 14. Inlet duct 13 supplies air to port 11 and valve 3 and contains a fuel injector 16. Inlet ducts 13 and 14 are fitted with throttle valves 17 and 18 respectively. The various components of the engine including the fuel injector and throttle valves and diverter valve are controlled by an electronic control system (not shown).

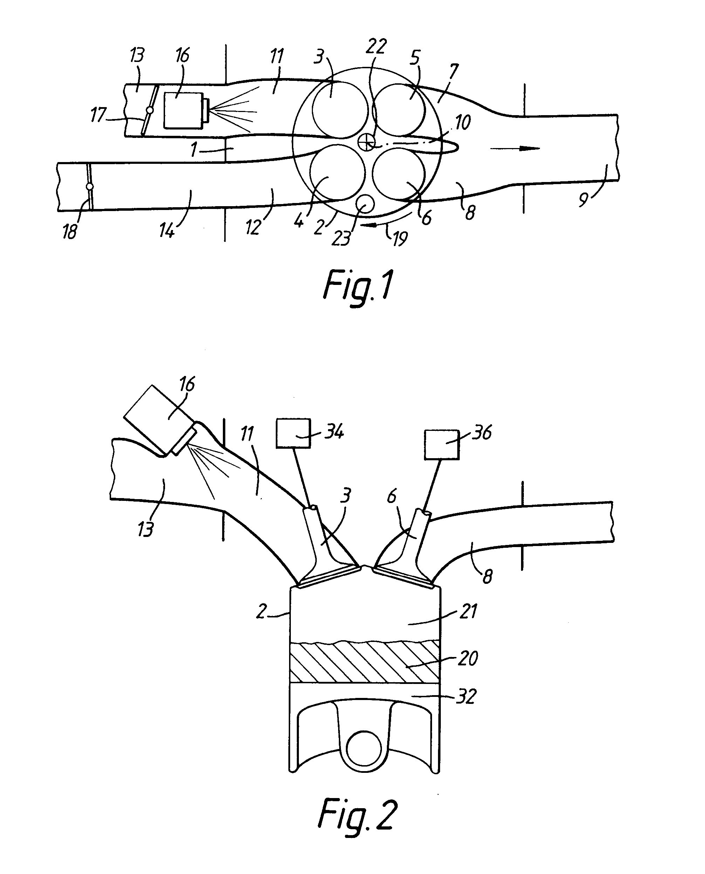

The inlet ports are of directed type, that is to say the airflow through them tends to flow predominantly in one radial direction with respect to the axial direction of the associated valve, that is to say generally in the direction in which the ports extend. Inlet port 11 is generally tangentially directed whereby gas flowing out of it tends to swirl in the cylinder in the clockwise direction in Figure 1 about the cylinder axis 10. Inlet port 12 is also tangentially directed, though in the opposite direction, whereby gas flowing out of it tends to swirl in the cylinder about the cylinder axis, but in the opposite, that is to say anti-clockwise direction.

Inlet valve 4 and exhaust valve 5 are operated by conventional cams and the like in the usual manner. However, inlet valve 3 and exhaust valve 6 are operated by respective variable valve timing (VVT) mechanisms 34,36 of variable period and phase type, which are also controlled by the electronic control system. Such a mechanism is disclosed in EP-A-0472430. Exhaust port 8 is also of directed type whereby gas flowing through it into the cylinder swirls about the cylinder axis in the clockwise direction seen in Figure 1.

At low engine load the throttle valve 18 is maintained closed whereby no air flows into the cylinder through the inlet port 12. At the beginning of each induction stroke of the piston the exhaust valve 6 is held open for a period of time by the VVT mechanism 36 and the inlet valve 3 is held closed. As the piston moves downwardly exhaust gas rather than air is thus induced into the cylinder and this exhaust gas is caused by the construction and orientation of the exhaust port 8 to swirl in the clockwise direction in the cylinder. At a time determined by the control system in dependence on the engine load and speed the exhaust valve 6 is closed and the inlet valve 3 is then opened. The fuel injector 16 is actuated as or slightly before the inlet valve 3 opens and an air/fuel mixture then flows through the inlet port 11 and swirls in the cylinder in the clockwise direction. Due to the fact that the REG and air/fuel mixture are induced sequentially and swirl in the same sense substantially no mixing occurs and they occupy respective portions 20,21 of the cylinder whereby a sharp stratification of the charge is produced. The air/fuel mixture is subsequently ignited by a spark plug 22 situated substantially on the cylinder axis and/or by a spark 23 situated adjacent to the periphery of the cylinder, depending on the combustion characteristics required.

As the engine load increases the period for which the exhaust valve 6 is held open and the inlet valve 3 is held closed during the induction is reduced so that a progressively decreasing volume of REG is induced and throttle valve 17 is progressively opened so that a progressively increasing volume of air is induced. Above a predetermined mid-load value the induction of REG is terminated, the valves 3 and 6 are controlled to operate at conventional timings, that is to say at the same times as the valves 4 and 5, and the valve 18 is progressively opened to admit additional air through the inlet port 12. Due to the opposite sense of the swirl of air induced through the inlet duct 12 the overall swirl of the inlet charge thus reduces as the engine load decreases, as is known to be desirable.

## Claims

1. A spark ignited engine employing exhaust gas recirculation and stratification of the recirculated exhaust gas and having at least one cylinder accommodating a piston and communicating with at least one inlet port cooperating with an inlet valve for inducing air into the cylinder and at least one exhaust port cooperating with an exhaust valve for discharging exhaust gas from the cylinder, the inlet port being so constructed and arranged that air flowing through it is caused to swirl in the cylinder about the cylinder axis in one direction, the means for introducing recirculated exhaust gas into the cylinder being so constructed and arranged that exhaust gas flowing through it is caused to swirl in the cylinder about the cylinder axis in the said one direction, characterised in that the inlet valve (3) and the exhaust valve (8) are connected to be operated by respective variable valve timing mechanisms (34,36) which are so controlled, at low engine loads, that at the beginning of each induction stroke of the piston (32) the exhaust valve (6) is open and the inlet valve (3) is closed whereby initially exhaust gas is induced into the cylinder whereafter the exhaust valve (6) is closed and the inlet valve (3) is opened and air is induced into the cylinder.

2. An engine as claimed in claim 1 characterised by a fuel injector (16) which is controlled to inject fuel into the inlet port (11) only after the inlet valve (3) has opened.

3. An engine as claimed in claim 1 or claim 2 characterised in that the cylinder (2) communicates with two exhaust ports (8,7) cooperating with respective exhaust valves (6,5) and that only the exhaust valve (6) is connected to a variable valve timing mechanism (36).

4. An engine as claimed in any one of claims 1 to 3 characterised in that the cylinder communicates with two inlet ports (11,12) cooperating with respective inlet valves (3,4) and that means (18) are provided which are controlled to permit no air to pass through the inlet port (12) at low engine loads, but to permit air to pass through it at high engine loads.
